# EUROPÄISCHE PATENTANMELDUNG

(11) **EP 1 591 628 A1**
(43) Veröffentlichungstag der Anmeldung: **02.11.2005**
(21) Anmeldenummer: 04010374.9
(22) Anmeldetag: 30.04.2004
(51) Int. Cl.: F01K 23/16, F01K 23/10, F01D 25/36

(54) **Kombianlage sowie Verfahren zur dessen Abkühlung**

(71) Anmelder: SIEMENS AKTIENGESELLSCHAFT, 80333 München (DE)
(72) Erfinder: Kauf, Michael, 44866 Bochum (DE); Lüneburg, Bernd, Dr., 45481 Muelheim (DE)

(57) **Zusammenfassung**

Die Erfindung betrifft eine als Einwellenanlage ausgeführte Kombianlage (2), im wesentlichen bestehend aus einer Gasturbine (3), einer Dampfturbine (6) und einem dazwischen geschalteten Generator (4), wobei zwischen Generator (4) und Dampfturbine (6) eine Kupplung (5) angeordnet ist, wobei zumindest eine Antriebseinrichtung (8) zum Antreiben der Einwellenanlage vorgesehen ist, wobei während eines Turnbetriebes die Kupplung (5) ausgerückt ist und eine Regeleinheit (9) zum Regeln einer Drehzahl der Dampfturbine (6) vorgesehen ist.

## Beschreibung

Die Erfindung betrifft eine als Einwellenanlage ausgeführte Kombianlage, im wesentlichen bestehend aus einer Gasturbine, einer Dampfturbine und einem zwischengeschalteten Generator, wobei zwischen Generator und Dampfturbine eine Kupplung angeordnet ist, wobei zumindest eine Antriebseinrichtung zum Antreiben der Einwellenanlage vorgesehen ist. Ferner betrifft die Erfindung ein Verfahren zum Abkühlen einer auf Betriebstemperatur erhitzten als Einwellenanlage ausgeführten Kombianlage.

In dem Bericht "Single shaft combined cycle power generation systems", 9^{th} Conference of Electric Power Supply Industry, Hong Kong 1992 sind als Einwellenanlage ausgeführte Kombianlagen beschrieben und demnach bekannt. Ein Generator wird hierbei durch eine Gasturbine und eine Dampfturbine angetrieben. Eine zwischen Dampfturbine und Gasturbine angeordnete Kupplung ist hierbei als synchronisierte und selbstschaltende Kupplung ausgebildet. Die Gasturbine kann daher allein betrieben werden. Die Abkühlzeiten der rotierenden Hauptkomponenten der Gasturbine als auch der Dampfturbine müssen abgewartet werden, um nach dem Abstellen der Kombianlage mit Revisions- oder Reparaturarbeiten beginnen zu können. Mittels einer Wellendrehvorrichtung müssen der Gasturbinenrotor und der Dampfturbinenrotor während dieser Abkühlzeit gedreht werden, um Verformungen in Folge Wärmespannungen zu vermeiden. In der Regel kühlt die Gasturbine bereits nach einem Tag auf eine Temperatur ab, ab der Revisionsarbeiten durchgeführt werden können, während die Dampfturbine hingegen bis zu einer Woche Abkühlzeit bedarf.

In der DE 44 26 354 C2 wird eine als Einwellenanlage ausgebildete Kombianlage dargestellt. Eine zwischen der Gasturbine und der Dampfturbine angeordnete Kupplung ist hierbei derart ausgebildet, dass diese im Ruhezustand ausgerückt ist und erst ab einer bestimmten Grenzdrehzahl selbsttätig einrückt. Die in der DE 44 26 354 C2 beschriebenen Kombianlage ist mit zwei als Antriebseinrichtungen wirkenden Wellendrehvorrichtungen ausgebildet. Eine Wellendrehvorrichtung ist zum Drehen des Dampfturbinenrotors vorgesehen, während die andere Wellendrehvorrichtung zum Drehen des Gasturbinenrotors vorgesehen ist.

Unterschreitet die Dampfturbinendrehzahl die Gasturbinendrehzahl ist es möglich, mit dem Einsatz der zwei Wellendrehvorrichtungen, sowohl den Dampfturbinenrotor als auch den Gasturbinenrotor unabhängig von einander während des Abkühlvorranges zu drehen.

Kombianlagen mit lediglich einer gemeinsamen Antriebseinrichtung sind ebenfalls bekannt. Bei dieser Ausführungsart wird über die Antriebseinrichtung der Dampfturbine der Gasturbinenstrang mitgedreht. Hierbei sind die Turndrehzahlen gleich. Die Kupplung zwischen Gasturbinen- und Dampfturbinenstrang ist gekuppelt.

Der axiale Spalt solch einer Kupplung beträgt nur wenige Millimeter. Während des Abkühlvorganges, dem sogenannten Turnbetrieb, ist es erforderlich, den Dampfturbinenrotor zu drehen, um dadurch ein thermisch induziertes Verkrümmen zu verhindern. Revisionsarbeiten am Rotor oder an in der Nähe des Rotors befindlichen Teilen der Gasturbine bei einer im Turnbetrieb befindlichen Dampfturbine sind aus Sicherheitsgründen verboten. In einem Störfall könnte die Kupplung unerwartet betätigt werden. Durch die große Massenträgheit des Dampfturbinenrotors und der relativ hohen Drehzahl während des Turnbetriebs, also der großen gespeicherten rotatorischen Energie, ist dadurch ein großes Gefahrenpotential gegeben, wenn die Kupplung in einem Störfall unerwartet betätigt wird.

Der Erfindung liegt die Aufgabe zu Grunde, bei einer Kombianlage der eingangs genannten Art ein Revisionskonzept und ein Verfahren zu schaffen, mit welchem nach dem Abstellen der Anlage der Zugang zum Gasturbinenstrang umfassend eine Gasturbine, einen Generator, eine Schleifringwelle und eine Erregereinrichtung früher erfolgen kann.

Die auf das Revisionskonzept hin gerichtete Aufgabe wird durch die Merkmale im kennzeichnenden Teil des Anspruchs 1 gelöst.

Die auf das Verfahren hin gerichtete Aufgabe wird durch die Merkmale des kennzeichnenden Teils des Anspruchs 6 gelöst.

Der Vorteil der Erfindung besteht insbesondere darin, dass die Drehzahl des Dampfturbinenrotors auf einen solch niedrigen Wert geregelt werden kann, dass ein Einkuppeln der Kupplung während eines Störfalles keine Auswirkungen auf den gesamten Wellenstrang, bestehend aus der Gasturbine, Generator und Dampfturbine besitzt.

Dadurch ist die Gefährdung von Mitarbeitern während Revisionsarbeiten an der Gasturbine nahezu eliminiert.

Ein weiterer Vorteil ist, dass der Einsatz von Blockiervorrichtungen, die bislang als aktiver Schutz eingesetzt wurden, nicht mehr notwendig sind.

Ein weiterer Vorteil ist, dass die Kupplung von vorhandenen Kombinanlagen nicht notwendiger Weise umkonstruiert werden muss.

Die Erfindung geht davon aus, dass die Regeleinheit derart ausgebildet wird, dass der Turnbetrieb, bei extrem geringen Drehzahlwerten durchgeführt wird. Dabei wird die Dampfturbinenwelle mit wenigen Umdrehungen pro Stunde gedreht. Die geringen Drehzahlwerte sind derart gewählt, dass selbst bei einem ungewollten Schalten der Kupplung, was zu einem Übertragen von Drehmomenten der Dampfturbine auf die übrigen Teile im Wellenstrang in der Regel ausübt, die auftretenden Beschleunigungskräfte nicht ausreichen, um ein Gefährdungspotential an der Gasturbine entstehen zu lassen. Ein Andrehen der Gasturbine wird dadurch nahezu verhindert.

Vorteilhafter Weise wird die Regeleinheit mit einem Sollwerteingang zum Eingeben einer Solldrehzahl ausgebildet.

Dadurch ist es möglich, von außen einen Sollwert vorzugeben. Je nach Ausführungsform der Dampfturbine und der Gasturbine können verschiedene Drehzahlen gewählt werden.

Zweckmäßiger Weise wird die Antriebseinrichtung als ein elektrisch getriebener oder als ölbetriebener Motor ausgebildet. Dadurch ist es möglich, je nach Anforderung und vorhandenen Equipment vor Ort eine zweckangepasste Antriebseinrichtung einzusetzen.

In einer weiteren vorteilhaften Ausgestaltung ist die Regeleinheit derart ausgebildet, dass die Drehzahl während des Turnbetriebes in beiden Drehrichtungen regelbar ist.

Der Abkühlvorgang kann durch diese Maßnahme insgesamt weiter verkürzt werden.

Ausführungsbeispiele der Erfindung werden anhand der Figuren dargestellt. In den Figuren werden funktionsähnliche Komponenten mit denselben Bezugszeichen bezeichnet.

### Dabei zeigen

Figur 1 eine schematische Darstellung einer Kombianlage; Figur 2 eine Ausführungsform einer Regeleinheit.

Figur 3 eine alternative schematische Darstellung einer Kombianlage

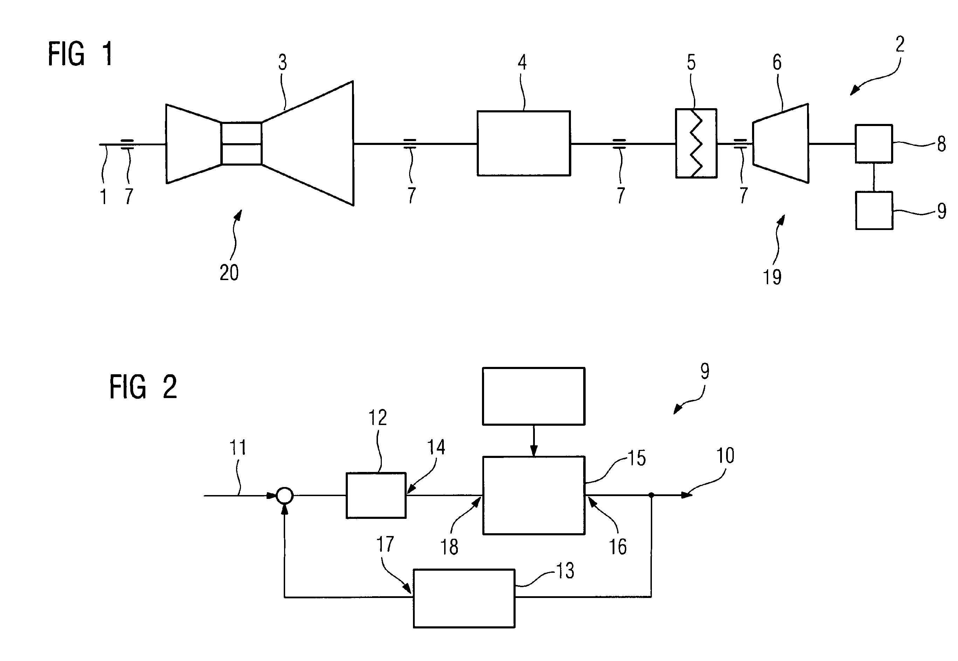

Wie in der Figur 1 dargestellt wird der gemeinsame Wellenstrang 1 der Einwellenanlage generell mit 1 bezeichnet. Die als eine Einwellenanlage ausgeführte Kombianlage 2 weist eine Gasturbine 3, einen Generator 4, eine Kupplung 5 und eine Dampfturbine 6 auf. Der Wellenstrang 1 wird über nicht näher dargestellte Lager 7 gelagert. Eine Antriebseinrichtung 8 ist mit dem Wellenstrang 1 derart verbunden, dass ein Drehmoment von der Antriebseinrichtung 8 auf den gesamten Wellenstrang 1 ausgeübt wird.

Die Antriebseinrichtung 8 kann als Turnmotor ausgebildet sein.

Die Antriebseinrichtung 8 kann als ölbetriebener oder als elektrisch mit Strom betriebener Motor ausgebildet sein.

Im bestimmungsgemäßen Betrieb schaltet die Kupplung 5 selbsttätig. Dadurch wird ein Drehmoment des Dampfturbinenrotors über die Kupplung 5 auf den Generator 4 und die Gasturbine 3 übertragen.

Um ein thermisch induziertes Verkrümmen der Dampfturbine 6 und der Gasturbine 3 zu vermeiden, müssen der Dampfturbinen- und Gasturbinenrotor während einer Abkühlzeit mittels der Antriebseinrichtung 8 gedreht werden. Zu Beginn des Abkühlvorganges kann die Kupplung 5 geschaltet bleiben, d.h. ein Drehmoment wird über die Kupplung 5 übertragen. Die Drehzahlen des Wellenstranges 1 können hierbei zwischen 3 und 200 Umdrehungen pro Minute betragen. Die Drehzahl kann auch zwischen 3 und 50 Umdrehungen pro Minute betragen. Wenn für die Gasturbine 3 Bedingungen erreicht sind, an denen Arbeiten zu Revisionszwecken oder Reparaturzwecken durchgeführt werden können, wird die Kupplung 5 geöffnet, d.h. es wird über die Kupplung 5 kein Drehmoment übertragen. Die Antriebseinrichtung 8 treibt nunmehr lediglich den Dampfturbinenrotor an.

Die Drehzahl der Antriebseinrichtung 8 wird mit einer Regeleinheit 9 geregelt. Dabei wird der Dampfturbinenrotor bei einer solch niedrigen Drehzahl gedreht, dass ein ungewolltes Schalten der Kupplung 5 zu keiner Drehung des Gasturbinenrotors führt. Die Drehzahlen des Dampfturbinenrotors liegen dann zwischen 1 und 240 Umdrehungen pro Stunde.

Die Drehzahlen des Dampfturbinenrotors kann auch zwischen 1 und 50 Umdrehungen pro Stunde liegen.

Die Drehzahl ist hierbei geringer als während des bestimmungsgemäßen Betriebes. Die Kupplung kann als bekannte Zahnkupplung ausgebildet sein. Die Aufgabe der Kupplung 5 ist, Dampfturbinenstrang 19 und Gasturbinenstrang 20 miteinander zu koppeln bzw. bei Bedarf zu entkoppeln.

Der Turnbetrieb ist erforderlich, um ein thermisch induziertes Verkrümmen des Dampfturbinen- oder Gasturbinenrotors zu verhindern.

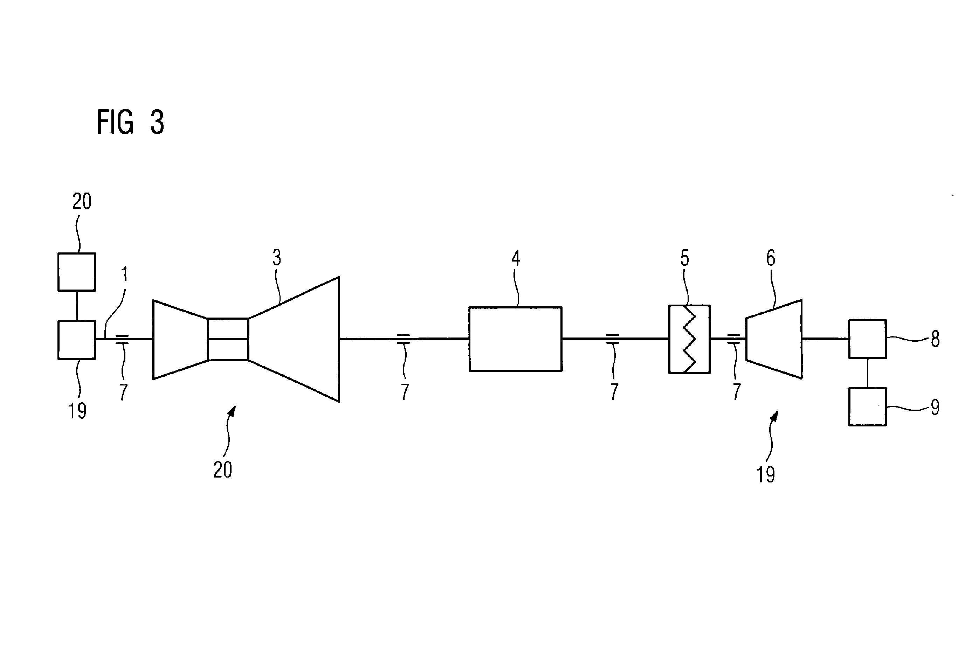

In der Figur 3 ist eine alternative schematische Darstellung einer Kombianlage dargestellt. Der Unterschied zur Figur 1 besteht darin, dass nun eine zweite Antriebseinrichtung (19) eingesetzt wird, um die Gasturbine (3) anzutreiben.

Dadurch ist es möglich, den Gasturbinenstrang (20) unabhängig von dem Dampfturbinenstrang (19), auch bei einer anderen Drehzahl während des Turnbetriebes zu betreiben. Beispielsweise kann die Gasturbine (3) bei Drehzahlen zwischen 120 und 200 Umdrehungen pro Minute und die Dampfturbine zwischen 50 und 60 Umdrehungen pro Minute betrieben werden. Selbstverständlich bleibt hierbei die Kupplung (5) ausgerückt.

Die Antriebseinrichtung (19) kann zudem noch mit einer weiteren Regeleinheit (20) verbunden werden.

In Figur 2 ist eine Regeleinheit 9 dargestellt. Die Regeleinheit 9 weist einen Reglerausgang 10 auf, der mit einem Eingang der Antriebseinrichtung 8 verbunden ist. Die Regeleinheit 9 weist einen Reglereingang 11 auf, an dem ein einstellbares Eingangssollwertsignal anliegt. Als Sollwert wird entweder die Drehzahl des Wellenstranges 1 oder die Drehzahl und/oder Drehmoment eingesetzt. Die Kernreglerbaueinheit 12 ist als PI- oder als PID-Regler ausgebildet. In alternativen Ausführungsformen kann die Kernreglerbaueinheit 12 auch als P-Regler ausgeführt sein.

An einem Reglerausgang 14 liegt ein Reglerausgangswert als Reglerausgangsignal an, der an einem Eingang 18 einer Wandlerbaueinheit 15 anliegt.

Die Regeleinheit 9 ist derart ausgebildet, dass über den Reglereingang 11 Sollwerte vorgebbar sind, die an einem Ausgang 16 zu einer Drehzahl als geregelten Ausgangswert führt, mit dem es möglich ist, die Drehzahl während des Turnbetriebes konstant niedrig zu halten.

Die Drehzahl wird hierbei derart gewählt, dass ein ungewolltes Schalten der Kupplung 5 während des Turnbetriebs keine Auswirkung auf den Wellenstrang hat.

In einer alternativen Ausführungsform kann die Regeleinheit (9) vollständig in das Turbinensteuerungssystem integriert werden. Eine Fehlbedienung durch außen von Dritten wird durch die vollständige Automatisierbarkeit nahezu verhindert.

## Patentansprüche

1. Als Einwellenanlage ausgeführte Kombianlage (2), im wesentlichen bestehend aus einer Gasturbine (3), einer Dampfturbine (6) und einem dazwischen geschalteten Generator (3), wobei zwischen Generator (4) und Dampfturbine (6) eine Kupplung (5) angeordnet ist, wobei zumindest eine Antriebseinrichtung (8) zum Antreiben der Einwellenanlage vorgesehen ist,
**dadurch gekennzeichnet, dass**
eine Regeleinheit (9) zum Regeln einer Drehzahl der Dampfturbine (6) vorgesehen ist.

2. Kombianlage (2) nach Anspruch 1,
**dadurch gekennzeichnet, dass**
die Regeleinheit (9) einen Sollwerteingang (11) zum Eingeben einer Solldrehzahl aufweist.

3. Kombianlage (2) nach Anspruch 1 oder 2,
**dadurch gekennzeichnet, dass**
die Antriebseinrichtung (8) als ein elektrisch betriebener Motor ausgebildet ist.

4. Kombianlage (2) nach Anspruch 1 oder 2,
**dadurch gekennzeichnet, dass**
die Antriebseinrichtung (8) als ein ölbetriebener Motor ausgebildet ist.

5. Kombianlage (2) nach einem der Ansprüche 1 bis 4,
**dadurch gekennzeichnet, dass**
die Regeleinheit (9) derart ausgebildet ist, dass die Drehzahl in beide Drehrichtungen regelbar ist.

6. Verfahren zum Abkühlen einer auf Betriebstemperatur erhitzten als Einwellenanlage ausgeführten Kombianlage (2) mit einer Gasturbine (3), einer Dampfturbine (6) und einem dazwischen geschalteten Generator (3), wobei zwischen Generator (3) und Dampfturbine (6) eine Kupplung (5) angeordnet wird, wobei zumindest eine Antriebseinrichtung (8) zum Antrieb der Einwellenanlage eingesetzt wird und während eines Turnbetriebs sowohl die Gasturbine als auch die Dampfturbine bei Drehzahlen zwischen 1 und 200 Umdrehungen pro Minute betrieben werden, **dadurch gekennzeichnet, dass** nach Beendigung des Abkühlvorganges der Gasturbine (3) die Dampfturbine (6) bei Drehzahlen zwischen 1 und 240 Umdrehungen pro Stunde bei ausgerückter Kupplung (5) betrieben und die Drehzahl der Dampfturbine (3) mit einer Regeleinheit (9) geregelt wird.

7. Verfahren nach Anspruch 6, **dadurch gekennzeichnet, dass** die Dampfturbine bei Drehzahlen zwischen 1 und 50 Umdrehungen pro Stunde betrieben wird.
